# Europäisches Patentamt
## European Patent Office
### Office européen des brevets

(19)

(11) Publication number: **0 005 854**
**B1**

(12)

# EUROPEAN PATENT SPECIFICATION

(45) Date of publication of patent specification: **07.10.81**

(51) Int. Cl.³: **G 01 V 9/04, F 16 P 3/14**

(21) Application number: **79101743.7**

(22) Date of filing: **01.06.79**

(54) **Apparatus for facilitating alignment of a group of cyclically switched light transmitters or receivers with a single light receiver or transmitter.**

(30) Priority: **02.06.78 DE 2824311**

(43) Date of publication of application:
**12.12.79 Bulletin 79/25**

(45) Publication of the grant of the European patent:
**07.10.81 Bulletin 81/40**

(84) Designated Contracting States:
**FR GB IT SE**

(56) References cited:
DE - A - 2 516 875
FR - A - 2 178 685
FR - A - 2 250 430
US - A - 4 013 886
US - A - 4 015 122

(73) Proprietor: **Erwin Sick GmbH Optik-Elektronik**
**Sebastian-Kneipp-Strasse 1**
**D-7808 Waldkirch (DE)**

(72) Inventor: **Erdmann, Jürgen**
**Eisenbahnstrasse 35**
**D-7808 Waldkirch 3 (DE)**
Inventor: **von Stein, Walter**
**Allmendweg 8**
**D-7808 Waldkirch (DE)**

(74) Representative: **Manitz, Gerhart, Dipl.-Phys.Dr. et al,**
**Robert-Koch-Strasse 1**
**D-8000 München 22 (DE)**

Courier Press, Leamington Spa, England.

**Apparatus for facilitating alignment of a group of cyclically switched light transmitters or receivers with a single light receiver or transmitter**

The invention relates to apparatus for facilitating alignment of a group of cyclically switched light transmitters, or receivers with a single light receiver, or transmitter, of the kind in which a series of spatially spaced beams, hereinafter referred to as a light grid, pass between the transmitters and the receiver, or alternatively between the transmitter and the receiver.

The problem of producing an alignment of this kind arises, for example, with light grids in which the transmitters comprise a number of individual gallium-arsenide diodes which are arranged in a row one above the other. Such diodes produce light in the infra-red spectrum and cannot thus be aligned with a receiver using the naked eye. The receiver can, for example, comprise a concave mirror and a photoelectric converter arranged at the focal point of the mirror. In light grids of this kind it is important that the gallium-arsenide diodes, which can for example be ten in number, are aligned with relatively small tolerances on the photoelectric converter via the concave mirror i.e. so that all of the ten transmitted rays can be united exactly at the focal point of the concave mirror. The gallium-arsenide diodes are then cyclically switched one after the other so that a pulse train of constant frequency is achieved at the output of the single photoelectric converter.

The apparatus of the present invention is thus principally intended for use with light grids which utilize light outside of the visible region of the electromagnetic spectrum. The use of the adjustment device is however not restricted to a group of cyclically switched light transmitters and a cooperating concave mirror and photoelectric converter. The light receiver can also comprise individual collimators arranged one above the other with the individual collimators being coupled to a single photoelectric converter, e.g. by means of light conducting fibres. The optical arrangement can also be inverted. Light can thus be radiated from a light source arranged at the focal point of the concave mirror and individual receiving collimators arranged in a line in the ray path from the concave mirror can receive the beams of light radiated therefrom and concentrate these on respective photoelectric converters. If the photoelectric converters are switched in one after the other then a continuous train of pulses of constant frequency can likewise be achieved.

It is known from German Auslegeschrift DE-AS 2 516 875 in connection with single beam reflex light barrier apparatus to provide circuitry for facilitating the alignment of a single light transmitter/receiver unit with a retro-reflector. For this purpose a gun sight is provided on the transmitter/receiver unit and an indicator lamp is provided at the pin of the gun sight. The indicator lamp, which can be conveniently viewed by the operator, lights when the receiver detects that the beam from the transmitter has been returned from the retro-reflector thus establishing that alignment has been achieved.

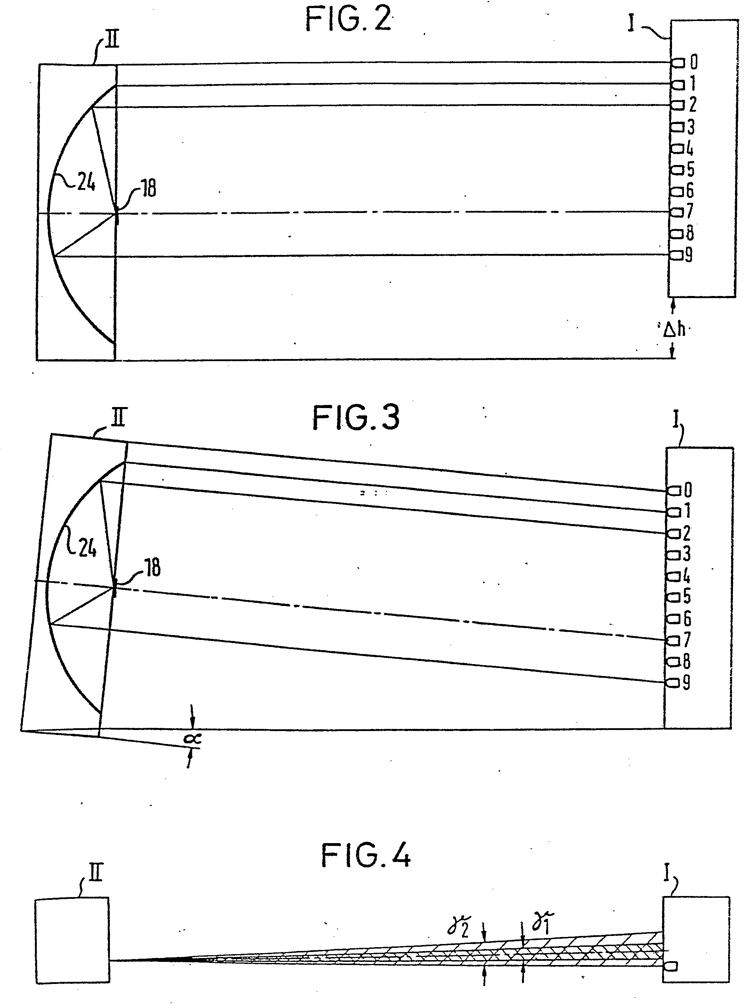

The apparatus of DE—AS 2 516 875 is, however not suitable for use with multiple beam apparatus of the kind to which the present invention is applicable. If one attempted to use the known arrangement to facilitate alignment of multiple beam apparatus there would be a tendency for the lamp to light as soon as a single light transmitter or receiver of the group was aligned with the single light receiver or transmitter. The alignment of only one beam does not however imply alignment of all the beams as can be readily seen from Figs. 2 and 3 of the accompanying drawings.

A similar arrangement to that described in connection with DE-AS 2 516 875 is also disclosed in US—PS 4 013 886. In the latter case however the indicator lamp is not incorporated in a gun sight. The comments made in respect of the arrangement of DE—AS 2 516 875 apply, however, equally to the arrangement of US—PS 4 013 886.

Examples of multiple beam light grid systems are also already known in the art, for example from US—PS 4 015 122.

This specification does not however deal with the problems of aligning such multiple beam systems and indeed indicates that, in the disclosed system, precise alignment is not necessary. This statement can be readily understood when one considers that US—PS 4 015 122 principally relates to the use of an extended source of visible light US—PS 4 015 122 thus does not address the problems of aligning multiple beam apparatus using non-extended light sources or multiple beam apparatus operating with light outside of the visible spectrum.

Another example of multiple beam apparatus is shown in French patent specification, 73 32 912 (Pub. No. 2 250 430). This specification is also silent as to the problems involved in producing alignment of the disclosed multiple beam apparatus.

A further example of multiple beam light grid apparatus is disclosed in French patent specification, No. 73 11 184 (Pub. No. 2 178 685). This specification discloses a light grid arrangement in which a number of individual light transmitter/receiver units are arranged in a row in juxtaposition to a large area retro-reflector. The transmitter of each transmitter/receiver unit directs a beam of light towards the retro-reflector and this beam of light is then returned from the retro-reflector to the receiver of that unit. The disclosed arrangement operates with luminescent diodes and thus, presumably, with light outside of the visible spectrum. The problem of aligning the row of light transmitter/receiver units with the retro-reflector is indeed addressed by this specification but is here solved by the use of an auxiliary device separate from the light barrier apparatus and operating in the visible spectrum. The specific arrangement features light sources provided at the upper and lower ends of the row of transmitter receiver units and alignment is effected by the operator recognizing the images of the light sources on the retro-reflector 11 and subsequently carrying out the adjustment with reference to control markings.

In view of the foregoing the present invention can be said to be based on the problem of providing apparatus for facilitating alignment of a group of cyclically switched light transmitters, or receivers, with a single light receiver, or transmitter, in a simple and reliable manner, making use, as far as is possible, of the basic transmitter and receiver elements which must in any case be present. The apparatus should also be particularly suitable for use with light transmitters and receivers which operate outside of the visible spectrum.

The above objects are satisfied, in apparatus of the initially named kind, by the provision of an adjustment monitoring device comprising a coincidence circuit connected to receive input signals from the single receiver or transmitter and signals representative of the operation of at least two of the elements of the group together with at least one adjustment indicating device responsive to the output from said coincidence circuit to indicate the state of the adjustment.

Thus, merely by the provision of a coincidence circuit, one or more adjustment indicating devices and circuitry interconnecting these items, it is possible to adapt existing multiple beam apparatus so as to be able to align the same in a simple and reliable manner.

The afore-mentioned adjustment indicating device or devices conveniently take the form of adjustment indicating lamps thus providing a visual signal when correct alignment is present.

The invention thus makes especial use of the recognition that, for correct individual adjustment of the individual elements of the group of light transmitters or receivers, trouble free adjustment between this group and the single transmitter and receiver is present if two elements of the group are correctly aligned therewith. The two elements of the group that are selected should preferably lie spatially as far apart from each other as possible in order to achieve a good accuracy of alignment. To effect the alignment the transmitters are displaced until both indicating devices are simultaneously activated. If the indicating devices are in the form of adjustment indicating lamps alignment is conveniently indicated when the adjustment lamps light up.

In a preferred embodiment the transmitted or received signals from two elements of the group are respectively passed to one input of respective AND-gates which together form the coincidence circuit. In this arrangement the signals of the single light receiver or transmitter are applied to the other inputs of the AND-gates and the outputs of the AND-gates are arranged to control respective adjustment indicating devices.

If the group of the cyclically switched transmitters or receivers lie in a row along a line then the signals of the first and last elements are usefully connected to the AND-gates. An adjustment can be effected by vertical displacement or tilting of for example the transmitters relative to the receiver until both adjustment lamps light up.

When this occurs the optimum adjustment has been found.

In order to guarantee that a certain quantity of light is in every case present at the receiver the signal from the light receiver (or transmitter) can be applied in accordance with a third embodiment to the AND-gates via an amplifier having a first threshold value so that both adjustment lamps light up only when the chosen signals exceed the specified threshold.

The adjustment is then further simplified if the signal of the single light receiver (or transmitter is in addition applied to a second amplifier having a second higher switching threshold which is connected via a switching stage to an oscillator of very low frequency, for example in the range 3 to 5 Hz, which actuates winker switches arranged between the AND-gates and the adjustment lamps when the switching stage detects a pulse which lies beneath the threshold value. In this manner a winking signal at one or both of the indicating lamps indicates, following an insufficient first preliminary adjustment, that the threshold of the first amplifier has been exceeded but not however that of the second amplifier. The optimum adjustment is only present when the relative position of the transmitter and receiver is further adjusted by tilting and vertical displacement until the winking signal changes to a continuous signal.

It is especially advantageous if the adjustment lamps are each arranged directly adjacent their associated light transmitter (or receiver) as then an optical impression of the correct adjustment is brought about by lighting up or extinction of the adjustment lamps.

The invention will now be described in more detail in the following by way of example only and with reference to the drawings in which are shown:

Fig. 1 a schematic illustration of a transmitter formed by an arrangement of ten gallium-arsenide diodes and a receiver formed by a concave mirror and a photoelectric converter in which the electronic processing circuit is shown as a block diagram.

Fig. 2 the optical arrangement of Fig. 1 but in a vertically mal-adjusted position,

Fig. 3 the optical arrangement of Fig. 1 but in an angularly mal-adjusted position,

Fig. 4 a plan view of the optical arrangement of Fig. 1 for the purpose of illustrating a change of the field of view,

Fig. 5 a time dependent plot of the receiver output signal showing the two amplifier threshold values in accordance with the present invention and

Fig. 6 a front view of a group of light transmitters with two associated adjustment indicating lamps.

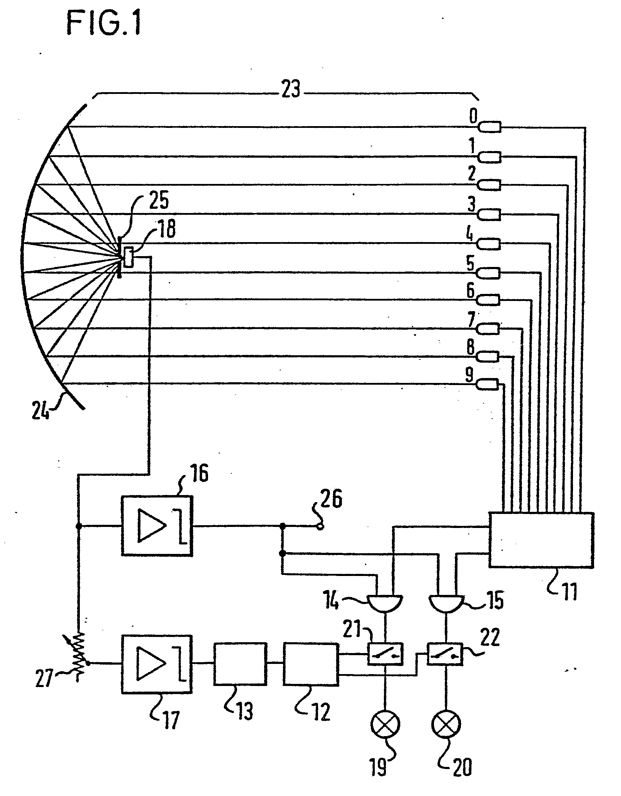

As seen in Fig. 1 ten radiation sources in the form of gallium-arsenide diodes 0 to 9 are arranged along a line and direct their light through a space 23 to be monitored towards a concave mirror 24. A single photoelectric converter 18 is arranged at the focal point of the mirror behind a slotted aperture stop 25.

The gallium-arsenide diodes 0 to 9 are cyclically excited to produce light flashes using a ring counter with a pulse generator 11. Thus an electrical square wave pulse output signal of predetermined frequency appears at the output of the photoelectric converter 18. If something enters the space 23 being monitored one or more of the output pulses from the photoelectric converter will be missing. The pulse train is passed via an amplifier 16, having a first low threshold value, to an output 26 to which a known electronic monitoring circuit can be connected which produces a warning signal if one or more pulses is missing from the pulse train.

For alignment purposes the output signal of the amplifier 16 is in addition applied to respective inputs of two AND-gates 14 and 15 and signals derived from the receivers 0 and 9 which originate from the ring counter 11 are respectively passed to the other inputs of the AND-gates. If desired signals from other transmitters than the end ones 0 and 9 can alternatively be applied to the relevant inputs of the AND-gates 14, 15.

Preferably however the signals from the outermost transmitters 0 and 9 are so applied.

The outputs of the AND-gates 14, 15 are applied via normally closed controlled switches 21, 22 to adjustment indicating lamps 19, 20.

Together with the lighting up of the radiation sources 0 and 9 input signals will be present at the respective inputs to the AND-gates 14 and 15. If the radiation sources 0 and 9 are not correctly aligned relative to the photoconverter 18 then the other two inputs of the AND-gates 14 and 15 do not receive signals and the adjustment lamps 19 and 20 do not light up. If however a signal appears at the photoconverter 18 as one or both of the transmitters lights up, then input signals appear at both inputs of the AND-gates 14 and 15 and the thus formed output signal of the AND-gates causes the relevant indicating lamp or lamps 19 or 20 to light up.

Fig. 2 shows how vertical displacement between the transmitter 1 and the receiver 2 results in light from the transmitter 0 failing to reach the receiving photoelectric converter 18. By displacement of the receiver II upwardly by the amount Δh the mal-adjustment can be removed. At the beginning of this displacement the adjustment lamp 19 is not lit. Lighting up of the adjustment lamp 19 is a sign which indicates correct adjustment.

Fig. 3 shows how the light from the transmitter 0 can pass by the receiver II due to a tilting of the receiver II through the angle $\alpha$ relative to the transmitter I. In this case the adjustment lamp 19 likewise does not light up and only the adjustment lamp 20 will receive an output signal from the gate 15. By tilting of the receiver through the angle $\alpha$ the adjustment lamp 19 can also be made to light up which is once more a sign which indicates correct adjustment.

Fig. 4 illustrates how the scattered cone of light corresponding to the aperture $\gamma 2$ of the receiver makes the adjudication of the exact alignment or focussing easier as, when using an amplifier with a relatively low threshold response, the scattered light alone is sufficient to indicate an approximate alignment so that the accurate adjustment corresponding to the aperture $\gamma 1$ of the corresponding brighter central cone can accurately and quickly take place.

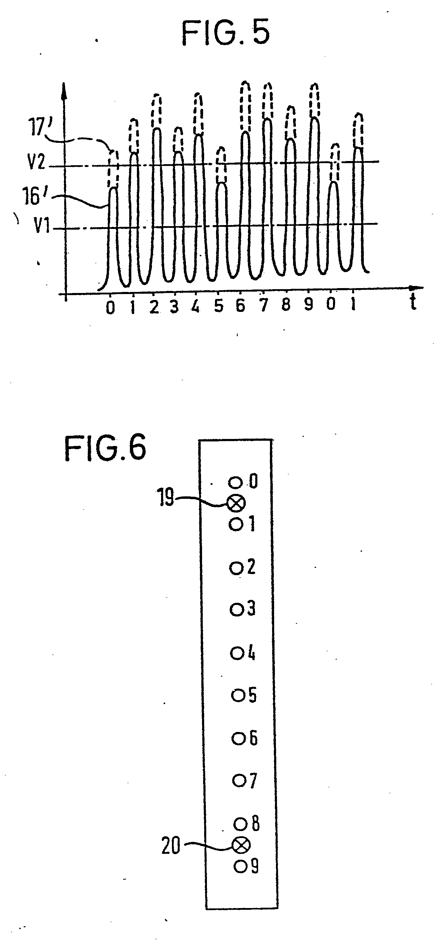

Finally a second amplifier 17 is additionally shown in Fig. 1 which has a controllable response threshold V2 adjustable via a potentiometer 27. This amplifier 17 first produces an output signal when the received signal at the receiving detector 18 is much stronger than that necessary at the amplifier 16 which has a lower response threshold V1. These two response thresholds V1 and V2 are illustrated in Fig. 5.

The amplifier 17 is connected via a switching stage 13 and an oscillator 12, which has a very low frequency in the range from 3 to 5 Hz, to two winker switches 21 and 22 which are connected in the path from the AND-gates 14 and 15 to the adjustment lamps 19 and 20.

In order to distinguish between partial and accurate adjustment, the switching stage 13 is so arranged that, if a single pulse from the train of pulses brought about by the transmitters 0 to 9 is missing at the output of the amplifier 17 then the oscillator 12 will be switched on and the signal to the adjustment lamps 19, 20 is periodically interrupted via the switches 21, 22. Thus a winking signal is present to the extent that the adjustment of the transmitters 0 and 9 is sufficiently advanced that both transmitters produce a signal at the output of the amplifier 16. This is illustrated by the received signal 16' shown in full lines in the diagram of Fig. 5. Every pulse of this signal 16' does indeed exceed the lower threshold V1 of the amplifier 16 however the pulses 0 and 5 are not able to exceed the higher threshold V2.

Only through a better alignment between the transmitter I and the receiver II does the signal at the converter 18 become sufficiently strong that it takes on the shape 17' illustrated in broken lines in Fig. 5. All pulses now exceed the threshold V2 so that winking of the lamps 19 and 20 ceases and the steady illumination of these lamps indicates an optimum adjustment. The double stage adjustment using the amplifiers 16 and 17 is useful for safer operation of the device as the better adjustment means a higher degree of contamination or dirtying of the optics can be tolerated.

Fig. 6 shows an especially useful arrangement in which the adjustment indicating lamps 19 and 20 are arranged adjacent the associated light transmitters 0 and 9.

If desired adjustment indicating lamps can be associated with further light ray sources or individual receivers.

It will be appreciated by those skilled in the art that although the preferred adjustment indicating devices are lamps it would also be possible to use for example an acoustic signalling system. In this case it is desirable to use acoustic signallers with different tones so as to be able to distinguish which acoustic signal is associated with which transmitter or receiver and thus to establish which form of mal-adjustment is present and requires correction.

It will be further appreciated that whilst the apparatus herein described is particularly suitable for use with a system operating with light in the infra-red region it could also be used for similar systems operating with light in other parts of the electromagnetic spectrum. It is for example contemplated that occasions may arise in which even a system operating in the visible spectrum cannot be conveniently adjusted by eye and it may then be desirable to use a system similar to that herein described.

Whilst the circuitry as specifically described is directed to an arrangement utilising a plurality of transmitters and a single receiver it will be understood that no particular difficulty exists in modifying the arrangement for operation with a single transmitter and a plurality of receivers. In particular it will still be possible in similar fashion to use threshold circuits to distinguish between partial and accurate adjustment. The modified threshold circuitry could either be achieved by using an amplifier with a negative gain to attenuate the signal derived from the signal transmitter or alternatively by amplifying the signals derived from the receivers.

Furthermore whilst the foregoing has been described in relation to a linear array of transmitters or receivers it will be appreciated that the present teaching can equally be applied to matrices of the same.

## Claims

1. Apparatus for facilitating alignment of a group of cyclically switched light transmitters, or receivers, (0 to 9) with a single light receiver, or transmitter, (18) wherein a series of spatially spaced beams pass between the transmitters and the receiver or between the transmitter and the receivers, the apparatus being characterized by the provision of an adjusment monitoring device comprising a coincidence circuit (14, 15) connected to receive input signals from the single receiver or transmitter (18) and signals representative of the operation of at least two of the elements (0 to 9) of the group together with at least one adjustment indicating device (19, 20) responsive to the output from said coincidence circuit to indicate the state of the adjustment.

2. Apparatus in accordance with claim 1 and characterized in that said beams lie in the infra-red region of the electromagnetic spectrum.

3. Apparatus in accordance with eiher of claims 1 or 2 and characterized in that the signals representative of the operation of two elements (for example the elements 0 and 9) of the group are respectively passed to one input of respective AND-gates (14, 15) which together form the coincidence circuit, the signals of the single light receiver, or transmitter, (18) being applied to the other inputs of the AND-gates, and in that the outputs of the AND-gates are arranged to control respective adjustment indicating devices (19, 20).

4. Apparatus in accordance with claim 3 in which the cyclically switched light transmitters, or receivers, lie along a line and characterized in that the signals from the first and last elements (0 and 9) are applied to the AND-gates (14, 15).

5. Apparatus in accordance with any one of the preceding claims and characterized in that the signal of the signal light receiver or transmitter (18) is applied to the coincidence circuit (14, 15) via an amplifier (16) having a first threshold value (V1).

6. Apparatus in accordance with claim 5 and characterized in that the signals of the single light receiver, or transmitter, (18) is also applied to a second amplifier (17) having a second higher threshold value (V2), the output of said second amplifier being applied to circuit means (13, 12, 21, 22) arranged to produce an indication of partial adjustment on the occurrence of a signal pulse below said second threshold (V2).

7. Apparatus in accordance with claim 6 characterized in that said coincidence circuit comprises two AND-gates, that said two adjustment indicating devices are provided in the form of two adjustment indicating lamps one in respect of each of said two elements of the group and that said circuit means comprises a switching stage (13) connected to an oscillator (12) of very low frequency, for example in the range 3 to 5 Hz, which actuates winker switches (21, 22) connected between the AND-gates (14, 15) and the adjustment indicating lamps (19, 20) to produce a pulsed indication from said adjustment indicating lamps when the switching stage measures a signal pulse which lies beneath the second threshold (V2).

8. Apparatus in accordance with any one of the preceding claims 1 to 6 characterized in that two adjustment indicating devices are provided one in respect of each of said elements (0 and 9) of the group and that each adjustment indicating device takes the form of an adjustment indicating lamp.

9. Apparatus in accordance with either of claims 7 and 8 and characterized in that the two adjustment lamps are respectively arranged directly alongside the associated ones of said elements (0 and 9) of the group.

10. Apparatus in accordance with any one of claims 1 to 6 and characterized in that the adjustment indicating device, or devices, is, or are, acoustic.

11. Apparatus in accordance with any one of the preceding claims and characterized in that said single transmitter or receiver (18) is arranged at the focus of a concave mirror (24).

## Revendications

1. Appareil pour faciliter l'alignement d'un groupe d'émetteurs ou de récepteurs de lumière (0 à 9) commutés périodiquement avec un récepteur ou émetteur unique (18) de lumière, dans lequel une série de faisceaux espacés spatialement passent entre les émetteurs et le récepteur ou entre l'émetteur et les récepteurs, l'appareil étant caractérisé par la présence d'un dispositif de contrôle de réglage comprenant un circuit (14, 15) à coincidence connecté de manière à recevoir des signaux d'entrée du récepteur ou émetteur unique (18) et des signaux représentatifs du fonctionnement d'au moins deux des éléments (0 à 9) du groupe, avec au moins un dispositif (19, 20) d'indication de réglage qui, en réponse au signal de sortie dudit circuit à coincidence, indique l'état du réglage.

2. Appareil selon la revendication 1 et caractérisé en ce que lesdits faisceaux sont compris dans la bande infrarouge du spectre électromagnétique.

3. Appareil selon l'une des revendications 1 ou 2 et caractérisé en ce que les signaux représentatifs du fonctionnement de deux éléments (par exemple les éléments 0 et 9) du groupe sont appliqués respectivement à une première entrée de portes ET respectives (14, 15) qui forment ensemble la circuit à coincidence, les signaux du récepteur ou de l'émetteur unique (18) de lumière étant appliqués aux autres entrées des portes ET, et en ce que les sorties des portes ET sont montées de manière à commander des dispositifs respectifs (19, 20) d'indication de réglage.

4. Appareil selon la revendication 3 dans lequel les émetteurs ou récepteurs de lumière, commutés périodiquement, sont disposés suivant une ligne et caractérisé en ce que les signaux provenant des premier et dernier éléments (0 et 9) sont appliqués aux portes ET (14, 15).

5. Appareil selon l'une quelconque des revendications précédentes et caractérisé en ce que le signal du récepteur ou émetteur unique (18) de lumière est appliqué au circuit (14, 15) à coincidence par l'intermédiaire d'un amplificateur (16) ayant une première valeur (V1) de seuil.

6. Appareil selon la revendication 5 et caractérisé en ce que les signaux du récepteur ou émetteur unique (18) de lumière sont également appliqués à un second amplificateur (17) ayant une seconde valeur (V2) de seuil plus élevée, le signal de sortie dudit second amplificateur étant appliqué à des éléments de circuit (13, 12, 21, 22) montés de manière à produire une indication d'un réglage partiel lors de l'apparition d'une impulsion de signal inférieure audit second seuil (V2).

7. Appareil selon la revendication 6, caractérisé en ce que ledit circuit à coincidence comprend deux portes ET, en ce que lesdits deux dispositifs d'indication de réglage se présentent sous la forme de deux lampes d'indication de réglage associées chacune à l'un desdits deux éléments du groupe, et en ce que lesdits éléments de circuit comprennent un étage (13) de commutation connecté à un oscillateur (12) à très basse fréquence, par exemple de l'ordre de 3 à 5 Hz, qui commande des interrupteurs (21, 22) de clignotement montés entre les portes ET (14, 15) et les lampes (19, 20) d'indication de réglage afin que lesdites lampes d'indication de réglage produisent une indication intermittente lorsque l'étage de commutation mesure une impulsion de signal située au-dessous du second seuil (V2).

8. Appareil selon l'une quelconque des revendications précédentes 1 à 6 et caractérisé en ce que deux dispositifs d'indication de réglage sont prévus et associés chacun à l'un desdits éléments (0 et 9) du groupe, et en ce qu chaque dispositif d'indication de réglage se présente sous la forme d'une lampe d'indication de réglage.

9. Appareil selon l'une des revendications 7 et 8 et caractérisé en ce que les deux lampes de réglage sont montées respectivement de manière à être placèes directement le long desdits éléments (0 et 9) du groupe associés à ces lampes.

10. Appareil selon l'une quelconque des revendications 1 à 6 et caractérisé en ce que le ou les dispositifs d'indication de réglage est ou sont acoustiques.

11. Appareil selon l'une quelconque des revendications précédentes et caractérisé en ce que ledit émetteur ou récepteur unique (18) est placé au foyer d'un miroir concave (24).

## Patentansprüche

1. Vorrichtung zur Erleichterung der Ausrichtung einer Gruppe von zyklisch geschalteten Lichtsendern oder -empfängern (0 bis 9) mit einem einzelnen Lichtempfänger bzw. -sender (18), wobei eine Reihe von räumlich getrennten Strahlen zwischen den Sendern und dem Empfänger bzw. zwischen dem Sender und den Empfängern verlaufen, dadurch gekennzeichnet, daß eine Ausrichtungs- Überwachungseinrichtung mit einer Koinzidenzschaltung (14, 15) vorgesehen ist, die zum Empfang von Eingangssignalen von dem einen Empfänger bzw. Sender (18) und von den Betrieb mindestens zweier Elemente (0 bis 9) der Gruppe anliegenden Signalen ausgelegt sind, zusammen mit mindestens einer Ausrichtungs-Anziegeeinrichtung (19, 20) zur Anzeige des Ausrichtungszustandes in Abhängigkeit vom Ausgangssignal der Koinzidenzschaltung.

2. Vorrichtung nach Anspruch 1, dadurch gekennzeichnet, daß die Strahlen im Infrarotbereich des elektromagnetischen Spektrums liegen.

3. Vorrichtung nach Anspruch 1 oder 2, dadurch gekennzeichnet, daß die den Betrieb von zwei Elementen (z.B. der Elemente 0 und 9) der Gruppe anzeigenden Signal jeweils an einen Eingang von UND-Gliedern (14, 15) angelegt sind, die zusammen die Koinzidenzschaltung bilden, daß die Signale des einzelnen Lichtempfängers bzw. -senders (18) an die jeweiligen anderen Eingänge der UND-Glieder angelegt sind und daß dei Ausgangssignale der UND-Glieder zur Steuerung der jeweiligen Ausricht-Anzeigeeinrichtungen (19, 20) dienen.

4. Vorrichtung nach Anspruch 3 mit längs einer Geraden angeordneten zyklisch geschalteten Lichtsendern bzw. -empfängern, dadurch gekennzeichnet, daß die Signale vom ersten und vom letzten Element (0 und 9) jeweils an die UND-Glieder (14, 15) angelegt sind.

5. Vorrichtung nach einem der vorangehenden Ansprüche dadurch gekennzeichnet, daß das Signal des einzelnen Lichtempfängers bz. -senders (18) über einen Verstärker (16) mit einem ersten Schwellwert (V1) an die Koinzidenzschaltung (14, 15) angelegt ist.

6. Vorrichtung nach Anspruch 5, dadurch gekennzeichnet, daß die Signale des einzelnen Lichtempfängers bzw. -senders (18) auch an einen zweiten Verstärker (17) mit einem zweiten, höheren Schwellwert (V2) angelegt sind, und daß das Ausgangsignal des zweiten Verstärkers an eine. zur Erzeugung einer Anzeige einer teilweisen Ausrichtung beim Auftreten eines unter dem zweiten Schwellwert (V2) liegenden Signalimpulses ausgelegten Schalteinrichtung (13, 12, 21, 22) angelegt ist.

7. Vorrichtung nach Anspruch 6, dadurch gekennzeichnet, daß die Koinzidenzschaltung zwei UND-Glieder (14, 15) umfaßt, daß die zwei Ausrichtungs- Anzeigeeinrichtungen in Form von zwei Ausricht-Anzeigelampen (19, 20) vorgesehen sind, von denen jeweils eine je einem der beiden Elemente der Gruppe zugeordnet ist und daß die Schalteinrichtung eine mit einem Oszillator (12) mit sehr niedriger Frequenz, z.B. im Bereich von 3 bis 5 Hz, verbundene Schaltstufe (13) umfaßt, die zwischen den UND-Gliedern (14) und den Ausricht-Anziegelampen (19, 20) verbundene Blinkschalter (21, 22) zur Erzeugung einer pulsierenden Anzeige der Ausricht-Anzeigelampen betätigt, wenn die Schaltstufe einen Signalimpuls mit einer Größe unter dem zweiten Schwellwert (V2) mißt.

8. Vorrichtung nach einem der vorangehenden Ansprüche 1 bis 6, dadurch gekennzeichnet, daß zwei Ausrichtungs-Anzeigeeinrichtungen vorgesehen sind, jeweils mit Bezug auf eines der Elemente (0 und 9) der Gruppe, und daß jede Ausrichtungs-Anzeigeeinrichtung die Form einer Ausricht-Anzeigelampe annimmt.

9. Vorrichtung nach einem der Ansprüche 7 oder 8, dadurch gekennzeichnet, daß die beiden Ausricht- Anzeigelampen jeweils direkt neben dem zugehörigen Element (0 oder 9) der Gruppe angeordnet sind.

10. Vorrichtung nach einem der Ansprüche 1 bis 6, dadurch gekennzeichnet, daß de Ausrichtungs- Anzeigeeinrichtung oder die -einrichtungen akustische Einrichtung(en) ist bzw. sind.

11. Vorrichtung nach einem der vorangehenden Ansprüche, dadurch gekennzeichnet, daß der einzelne Empfänger bzw. Sender (18) im Brennpunkt eines Konkav-Spiegels (24) angeordnet ist.

# FIG.1

# FIG.2

# FIG.3

# FIG.4

# FIG. 5

# FIG. 6